(19) Europäisches Patentamt
European Patent Office
Office européen des brevets

(11) **EP 3 818 830 A1**

(12) **EUROPEAN PATENT APPLICATION**
published in accordance with Art. 153(4) EPC

(43) Date of publication:
**12.05.2021 Bulletin 2021/19**

(51) Int Cl.:
*A01N 47/30* (2006.01)  *A01N 43/40* (2006.01)
*A01N 43/707* (2006.01)  *A01N 43/56* (2006.01)

(21) Application number: **19811257.5**

(22) Date of filing: **21.05.2019**

(86) International application number:
**PCT/CN2019/087686**

(87) International publication number:
**WO 2019/228215 (05.12.2019 Gazette 2019/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.06.2018  CN 201810556586**

(71) Applicant: **Qingdao KingAgroot Chemical
Compound Co., Ltd.
Qingdao, Shandong 266000 (CN)**

(72) Inventors:
• **JIN, Tao**
  **Qingdao, Shandong 266000 (CN)**
• **PENG, Xuegang**
  **Qingdao, Shandong 266000 (CN)**
• **ZHAO, De**
  **Qingdao, Shandong 266000 (CN)**

(74) Representative: **Finnegan Europe LLP
1 London Bridge
London SE1 9BG (GB)**

(54) **TERNARY HERBICIDAL COMPOSITION AND APPLICATION THEREOF**

(57)    The present invention belongs to the technical field of pesticides, and particularly relates to a ternary herbicidal composition and application thereof. The ternary herbicidal composition comprises an active ingredient A, an active ingredient B and an active ingredient C in an herbicidally effective amount, wherein the active ingredient A is huanbifucaotong and/or salt thereof; the active ingredient B is diflufenican and/or salt thereof; the active ingredient C is flufenacet and/or salt thereof. The composition is capable of effectively controlling weeds such as *Malachium aquaticum, Matricaria recutita, Veronica didyma Tenore, Senecio scandens, Sonchus arvensis,* etc. in a crop, and has the following advantages: exhibiting a broad spectrum of weed control, being used in a reduced dose, being safe for crops, and being capable of bringing about a synergistic effect and removing resistant weeds.

EP 3 818 830 A1

## Description

### Technical field

The present invention belongs to the technical field of pesticides, and particularly relates to a ternary herbicidal composition and application thereof.

### Background art

Chemical control of weed is a most economical and effective means for controlling weeds in farmlands, however, continuously use of a single chemical herbicide or chemical herbicides having a single functional mechanism at a high dosage for a long period of time is likely to cause problems associated with evolved drug resistance and tolerance of weeds.

Well complexing or formulating of herbicidal compounds can achieve the following advantages: exhibiting a broad spectrum of weed control, improving weed control effect, and delaying occurrence and development of drug resistance and tolerance of weeds, and thus is one of the most effective means to solve the above problems. Accordingly, herbicidal compositions which have a high safety and a broad weed controlling spectrum, and are capable of bringing about a synergistic effect and removing resistant weeds are desiderated in production.

### The contents of the invention

In order to solve the above existing problems in the prior art, the present invention provides a ternary herbicidal composition and application thereof. The composition is capable of effectively controlling weeds such as *Malachium aquaticum, Matricaria recutita, Veronica didyma Tenore, Senecio scandens, Sonchus arvensis,* etc. in a crop, and has the following advantages: exhibiting a broad spectrum of weed control, being used in a reduced dose, being safe for crops, and being capable of bringing about a synergistic effect and removing resistant weeds.

A ternary herbicidal composition, wherein comprises an active ingredient A, an active ingredient B and an active ingredient C in an herbicidally effective amount, wherein the active ingredient A is huanbifucaotong (CAS: 1855929-45-1) and/or salt thereof; the active ingredient B is diflufenican (CAS: 83164-33-4) and/or salt thereof; the active ingredient C is flufenacet (CAS: 142459-58-3) and/or salt thereof.

The ingredient A to the ingredient B to the ingredient C is in a weight ratio of 1~100:1~100:1~100, preferably 5~80:5~80:5~80, more preferably 8~60:8~60:10~70, further preferably 10~40:10~40:15~60.

The ingredients A, B and C together account for 1-95% of the total weight of the herbicidal composition, preferably 10-80%.

The herbicidal composition may comprise a conventional adjuvant, the conventional adjuvant comprises, for example, a carrier and/or a surfactant.

The term "carrier" herein refers to an organic or inorganic, natural or synthetic substance, which facilitates the application of the active ingredients. In general, the carrier is inert and must be agriculturally acceptable, especially is acceptable to a plant to be treated. The carrier may be a solid, such as clay, a natural or synthetic silicate, silica, a resin, a wax, a solid fertilizer and so on; or a liquid such as water, an alcohol, a ketone, a petroleum fraction, an aromatic or paraffinic hydrocarbon, a chlorohydrocarbon, liquefied gas and so on.

The surfactant, which may be ionic or non-ionic, can include an emulsifier, a dispersant or a wetting agent. Examples which may be mentioned are a salt of polyacrylic acid, a salt of lignosulfonic acid, a salt of phenolsulfonic acid or of naphthalenesulfonic acid, a polymer of ethylene oxide with an aliphatic alcohol or with an aliphatic acid or with an aliphatic amine or with a substituted phenol (in particular, an alkylphenol or an arylphenol), a sulfosuccinate, a taurine derivative (especially an alkyl taurate) and a phosphoric ester of an alcohol or of a polyhydroxyethylated phenol, an alkyl sulfonate, an alkylaryl sulfonate, an alkyl sulfate, a laurylether sulfate, a fatty alcohol sulfate, a sulfated hexadecanol, heptadecanol and octadecanol and a sulfated fatty alcohol polyglycol ether, and further include a condensate of naphthalene or naphthalenesulfonic acid with phenol and formaldehyde, polyoxyethylene octylphenyl ether, ethoxylated isooctylphenol, octylphenol or nonylphenol, a polyethylene glycol alkylphenyl ether, a polyethylene glycol tributylphenyl ether, a polyethylene glycol tristearylphenyl ether, a alkylaryl polyether alcohol, an alcohol and fatty alcohol/ethylene oxide condensate, ethoxylated castor oil, a polyoxyethylene alkyl ether, an ethoxylated polyoxypropylene, a lauryl alcohol polyglycol ether acetal, a sorbitol ester, a lignin sulfite waste liquid, a protein, a denatured protein, a polysaccharide (e.g., methylcellulose), a hydrophobic modified starch, a polyvinyl alcohol, a polycarboxylate, a polyalkoxylate, a polyvinylamine, a polyvinylpyrrolidone, and a copolymer thereof. At least one surfactant may be required to facilitate dispersion of the active ingredient in water and proper application thereof to a plant.

The composition can also comprise various other components, such as a protective colloid, an adhesive, a thickener, a thixotropic agent, a penetrant, a stabilizer, a chelating agent, a dye, a colorant or a polymer.

In addition, the ternary composition of the present invention which can be combined with the active compounds are, for example, known active compounds as described in for example World Herbicide New Product Technology Handbook, China Agricultural Science and Farming Techniques Press, 2010.9 and in the literature cited therein. For example the following active compounds may be mentioned as herbicides (note: the compounds are either named by the "common name" in accordance with the International Organization for Standardization (ISO) or by the chemical names, if appropriate together with a customary code number): acetochlor, butachlor, alachlor, propisochlor, metolachlor, s-metolachlor, pretilachlor, propachlor, ethachlor, napropamide, R-left handed napropamide, propanil, mefenacet, diphenamid, diflufenican, ethaprochlor, beflubutamid, bromobutide, dimethenamid, dimethenamid-P, etobenzanid, flufenacet, thenylchlor, metazachlor, isoxaben, flamprop-M-methyl, flamprop-M-propyl, allidochlor, pethoxamid, chloranocryl, cyprazine, mefluidide, monalide, delachlor, prynachlor, terbuchlor, xylachlor, dimethachlor, cisanilide, trimexachlor, clomeprop, propyzamide, pentanochlor, carbetamide, benzoylprop-ethyl, cyprazole, butenachlor, tebutam, benzipram, mogrton, dichlofluanid, naproanilide, diethatyl-ethyl, naptalam, flufenacet, benzadox, chlorthiamid, chlorophthalimide, isocarbamide, picolinafen, atrazine, simazine, prometryn, cyanatryn, simetryn, ametryn, propazine, dipropetryn, SSH-108, terbutryn, terbuthylazine, triaziflam, cyprazine, proglinazine, trietazine, prometon, simetone, aziprotryne, desmetryn, dimethametryn, procyazine, mesoprazine, sebuthylazine, secbumeton, terbumeton, methoprotryne, cyanatryn, ipazine, chlorazine, atraton, pendimethalin, eglinazine, cyanuric acid, indaziflam, chlorsulfuron, metsulfuron-methyl, bensulfuron methyl, chlorimuron-ethyl, tribenuron-methyl, thifensulfuron-methyl, pyrazosulfuron-ethyl, mesosulfuron, iodosulfuron-methyl sodium, foramsulfuron, cinosulfuron, triasulfuron, sulfometuron methyl, nicosulfuron, ethametsulfuron-methyl, amidosulfuron, ethoxysulfuron, cyclosulfamuron, rimsulfuron, azimsulfuron, flazasulfuron, monosulfuron, monosulfuron-ester, flucarbazone-sodium, flupyrsulfuron-methyl, halosulfuron-methyl, oxasulfuron, imazosulfuron, primisulfuron, propoxycarbazone, prosulfuron, sulfosulfuron, trifloxysulfuron, triflusulfuron-methyl, tritosulfuron, sodium metsulfuron methyl, flucetosulfuron, HNPC-C, orthosulfamuron, propyrisulfuron, metazosulfuron, acifluorfen, fomesafen, lactofen, fluoroglycofen, oxyfluorfen, chlornitrofen, aclonifen, ethoxyfen-ethyl, bifenox, nitrofluorfen, chlomethoxyfen, fluorodifen, fluoronitrofen, furyloxyfen, nitrofen, TOPE, DMNP, PPG1013, AKH-7088, halosafen, chlortoluron, isoproturon, linuron, diuron, dymron, fluometuron, benzthiazuron, methabenzthiazuron, cumyluron, ethidimuron, isouron, tebuthiuron, buturon, chlorbromuron, methyldymron, phenobenzuron, SK-85, metobromuron, metoxuron, afesin, monuron, siduron, fenuron, fluothiuron, neburon, chloroxuron, noruron, isonoruron, 3-cyclooctyl-1, thiazfluron, tebuthiuron, difenoxuron, parafluron, methylamine tribunil, karbutilate, trimeturon, dimefuron, monisouron, anisuron, methiuron, chloreturon, tetrafluron, phenmedipham, phenmedipham-ethyl, desmedipham, asulam, terbucarb, barban, propham, chlorpropham, rowmate, swep, chlorbufam, carboxazole, chlorprocarb, fenasulam, BCPC, CPPC, carbasulam, butylate, benthiocarb, vernolate, molinate, triallate, dimepiperate, esprocarb, pyributicarb, cycloate, avadex, EPTC, ethiolate, orbencarb, pebulate, prosulfocarb, tiocarbazil, CDEC, dimexano, isopolinate, methiobencarb, 2,4-D butyl ester, MCPA-Na, 2,4-D isooctyl ester, MCPA isooctyl ester, 2,4-D sodium salt, 2,4-D dimethylamine salt, MCPA-thioethyl, MCPA, 2,4-D propionic acid, high 2,4-D propionic acid salt, 2,4-D butyric acid, MCPA propionic acid, MCPA propionic acid salt, MCPA butyric acid, 2,4,5-D, 2,4,5-D propionic acid, 2,4,5-D butyric acid, MCPA amine salt, dicamba, erbon, chlorfenac, saison, TBA, chloramben, methoxy-TBA, diclofop-methyl, fluazifop-butyl, fluazifop-p-butyl, haloxyfop-methyl, haloxyfop-P, quizalofop-ethyl, quizalofop-p-ethyl, fenoxaprop-ethy, fenoxaprop-p-ethyl, propaquizafop, cyhalofop-butyl, metamifop, clodinafop-propargyl, fenthiaprop-ethyl, chloroazifop-propynyl, poppenate-methyl, trifopsime, isoxapyrifop, paraquat, diquat, oryzalin, ethalfluralin, isopropalin, nitralin, profluralin, prodinamine, benfluralin, fluchloraline, dinitramina, dipropalin, chlornidine, methalpropalin, dinoprop, glyphosate, anilofos, glufosinate ammonium, amiprophos-methyl, sulphosate, piperophos, bialaphos-sodium, bensulide, butamifos, phocarb, 2,4-DEP, H-9201, zytron, imazapyr, imazethapyr, imazaquin, imazamox, imazamox ammonium salt, imazapic, imazamethabenz-methyl, fluroxypyr, fluroxypyr isooctyl ester, clopyralid, picloram, trichlopyr, dithiopyr, haloxydine, 3,5,6-trichloro-2-pyridinol, thiazopyr, fluridone, aminopyralid, diflufenzopyr, triclopyr-butotyl, Cliodinate, sethoxydim, clethodim, cycloxydim, alloxydim, clefoxydim, butroxydim, tralkoxydim, tepraloxydim, buthidazole, metribuzin, hexazinone, metamitron, ethiozin, ametridione, amibuzin, bromoxynil, bromoxynil octanoate, ioxynil octanoate, ioxynil, dichlobenil, diphenatrile, pyraclonil, chloroxynil, iodobonil, flumetsulam, florasulam, penoxsulam, metosulam, cloransulam-methyl, diclosulam, pyroxsulam, benfuresate, bispyribac-sodium, pyribenzoxim, pyriftalid, pyriminobac-methyl, pyrithiobac-sodium, benzobicylon, mesotrione, sulcotrione, tembotrione, tefuryltrione, bicyclopyrone, ketodpiradox, isoxaflutole, clomazone, fenoxasulfone, methiozolin, fluazolate, pyraflufen-ethyl, pyrazolynate, difenzoquat, pyrazoxyfen, benzofenap, nipyraclofen, pyrasulfotole, topramezone, pyroxasulfone, cafenstrole, flupoxam, aminotriazole, amicarbazone, azafenidin, carfentrazone-ethyl, sulfentrazone, bencarbazone, benzfendizone, butafenacil, bromacil, isocil, lenacil, terbacil, flupropacil, cinidon-ethyl, flumiclorac-pentyl, flumioxazin, propyzamide, MK-129, flumezin, pentachlorophenol, dinoseb, dinoterb, dinoterb acetate, dinosam, DNOC, chloronitrophene, medinoterb acetate, dinofenate, oxadiargyl, oxadiazon, pentoxazone, Flufenacet, fluthiacet-methyl, fentrazamide, flufenpyr-ethyl, pyrazon, brompyrazon, metflurazon, kusakira, dimidazon, oxapyrazon, norflurazon, pyridafol, quinclorac, quinmerac, bentazone, pyridate, oxaziclomefone, benazolin, clomazone, cinmethylin, ZJ0702, pyribambenz-propyl, indanofan, sodium chlorate, dalapon, trichloroacetic acid, monochloroacetic acid, hexachloroacetone, flupropanate, cyperquat, bromofenoxim, epronaz, methazole, flurtamone, benfuresate, ethofumesate, tioclorim, chlorthal, fluorochloridone, tavron, acrolein, bentranil, tridiphane, chlorfenpropmethyl, thidiarizonaimin, phenisopham, busoxinone, methoxyphenone, saflufenacil, clacyfos, chloropon, alorac, diethamquat, etnipromid, iprymidam, ipfencarbazone, thiencarbazone-methyl, pyrimisulfan, chlorflurazole, tripropindan, sulglycapin, prosulfalin, cambendichlor, aminocyclopyrachlor, rodethanil, benoxacor, fenclorim, flurazole, fenchlorazole-ethyl, cloquintocet-mexyl, oxabetrinil, MG/91, cyometrinil, DKA-24, mefenpyr-diethyl, furilazole, fluxofenim, isoxadifen-ethyl, dichlormid, halauxifen-methyl, DOW florpyrauxifen, UBH-509, D489, LS 82-556, KPP-300, NC-324, NC-330, KH-218, DPX-N8189, SC-0744, DOWCO535, DK-8910, V-53482, PP-600, MBH-001, KIH-9201, ET-751, KIH-6127 and KIH-2023.

The herbicidal composition may further comprise one or more safeners, which is one or more compounds selected from,

a) Compounds of the dichlorophenylpyrazoline-3-carboxylic acid (S1) type, preferably compounds such as ethyl 1-(2,4-dichlorophenyl)-5-(ethoxycarbonyl)-5-methyl-2-pyrazoline-3-carboxylate (S1-1, mefenpyr-diethyl, PM, pp.594-595), and related compounds as they are described for example in WO 91/07874 and PM (pp.594-595).

b) Dichlorophenylpyrazolecarboxylic acid derivatives, preferably compounds such as ethyl 1 - (2,4-dichlorophenyl)-5-methylpyrazole-3-carboxylate (S1-2), ethyl 1-(2,4-dichlorophenyl)-5 - isopropylpyrazole-3-carboxylate(SI-3), ethyl 1-(2,4-dichlorophenyl)-5-(1,1-dimethyl-ethyl) pyrazole - 3-carboxylate (S1-4), ethyl-1-(2,4-dichlorophenyl)-5-phenylpyrazole-3-carboxylate (S1-5) and related compounds as are described in EP-A-333 131 and EP-A-269 806.

c) Compounds of the triazolecarboxylic acid (S1) type, preferably compounds such as fenchlorazole, i.e. ethyl 1-(2,4-dichlorophenyl)-5-trichloromethyl-(1H)-1,2,4-triazole-3-carboxylate (S1-6) and related compounds (see EP-A-174 562 and EP-A-346 620).

d) Compounds of the 5-benzyl- or 5-phenyl-2-isoxazoline-3-carboxylic acid type or of the 5,5-diphenyl-2-isoxazoline-3-carboxylic acid type, preferably compounds such as ethyl 5-(2,4-dichlorobenzyl)-2- isoxazoline-3 -carboxylate (S1-7) or ethyl 5-phenyl-2-isoxazoline-3- carboxylate (S1-8) and related compounds as are described in WO 91/08202, or of ethyl 5,5-diphenyl-2-isoxazoline-3-carboxylate (S1-9, isoxadifen-ethyl) or n-propyl 5,5-diphenyl-2-isoxazoline-3-carboxylate(S1-10) or ethyl 5-(4-fluorophenyl)-5-phenyl-2-isoxazoline-3- carboxylate (S1-11), as are described in patent application (WO-A-95/07897).

e) Compounds of the 8-quinoline oxyacetic acid (S2) type, preferably 1-methylhex-1-yl (5-chloro-8-quinolinoxy)acetate(S2-1, cloquintocet-mexyl, e.g. PM (pp.195-196), (1,3-dimethylbut -1-yl) (5-chloro-8-quinolinoxy)acetate(S2-2), 4-allyloxybutyl (5-chloro-8- quinolinoxy) acetate (S2-3), 1-allyloxyprop-2-yl(5-chloro-8-quinolinoxy)acetate(S2-4), ethyl (5-chloro-8-quinolinoxy) acetate (S2-5), methyl (5-chloro-8-quinolinoxy)acetate (S2-6), allyl (5-chloro-8-quinolinoxy)acetate (S2-7),2- (2-propylideneiminooxy)- 1 -ethyl (5-chloro-8-quinolinoxy)acetate (S2-8), 2-oxoprop-1-yl (5-chloro-8-quinolinoxy)acetate (S2-9) and related compounds as are described in EP-A-86750, EP-A-94349 and EP-A-191736 or EP-A-0492366.

f) Compounds of the (5-chloro-8-quinolinoxy)malonic acid type, preferably compounds such as diethyl (5-chloro-8-quinolinoxy)malonate, diallyl (5-chloro-8-quinolinoxy)malonate, methyl ethyl (5-chloro-8-quinolinoxy)-malonate and related compounds as are described in EP-A-0582 198.

g) Active compounds of the phenoxyacetic acids, phenoxypropionic acids or aromatic carboxylic acids type, such as, for example, 2,4-dichlorophenoxyacetic acid (and esters) (2,4-D), 4-chloro-2-methylphenoxypropionic esters (mecoprop), MCPA or 3,6-dichloro-2-methoxybenzoic acid (and esters) (dicamba).

h) active compounds of the pyrimidine type, such as, for example, "fenclorim" (PM, pp.386-387) (= 4,6- dichloro-2-phenylpyrimidine).

i) active compounds of the dichloroacetamide type, which are frequently used as pre-emergence safeners (soil-acting safeners) such as, for example,"dichloromid" (PM, pp. 270-271) (=N,N-diallyl-2,2-dichloroacetamide),"AR-29148"(=3-dichloroacetyl-2,2,5-trimethyl-1,3-oxazolidone by Stauffer),"benoxacor"(PM, pp.74-75) (=4-dichloroacetyl-3,4-dihydro-3-methyl-2H-1,4-benzoxazine), "APPG-1292" (= N-allyl-N[(1,3-dioxolan-2-yl)-methyl]dichloroacetamide by PPG Industries), "ADK-24" (=N-allyl-N-[(allylaminocarbonyl)-methyl]-dichloroacetamide by Sagro-Chem), "AAD-67" or "AMON 4660" (=3-dichloroaceryl-1-oxa-3-aza-spiro[4,5]decane by Nirrokemia or Monsanto), "diclonon" or "ABAS145138"or "ALAB145138" (= (= 3-dichloroacetyl -2,5,5-trimethyl-1,3- diazabicyclo[4.3.0]nonane by BASF) and"furilazol" or "AMON 13900" (see PM, 482-483) (= (RS)-3-dichloroacetyl-5-(2-furyl)-2,2- dimethyloxazoli done) .

j) active compounds of the dichloroacetone derivatives type, such as, for example,"AMG 191" (CAS Reg. No. 96420-72-3) (= 2-dichloromethyl-2-methyl-1,3-dioxolane by Nitrokemia).

k) active compounds of the oxyimino compounds type which are known as seed-dressing materials such as, for example, "oxabetrinil" (PM, p.689) (=(Z)-1,3-dioxolan-2- ylmethoxyimino (phenyl)acetonitrile), which is known as safener in seed dressing to prevent metolachlor damage, "fluxofenim" (PM, pp. 467-468) (= 1-(4-chlorophenyl)-2,2,2-trifluoro-1-ethanone O-(1,3-dioxolan-2- ylmethyl)-oxime, which is known as safener in seed dressing to prevent metolachlor damage, and "cyometrinil" or "A-CGA-43089" (PM, p. 983) (= (Z)-cyanomethoxyimino(phenyl)acetonitrile), which is known as safener in seed dressing to prevent metolachlor damage.

l) active compounds of the thiazolecarboxylic esters type, which are known as seed-dressing materials, such as, for example,"flurazol" (PM, pp. 450-451) (= benzyl 2-chloro-4-trifluoromethyl - 1,3-thiazole-5-carboxylate), which is known as safener in seed dressing to prevent alachlor and metolachlor damage.

m) active compounds of the naphthalenedicarboxylic acid derivatives type which are known as seed- dressing agents, such as, for example,"naphthalic anhydride" (PM, pp. 1009-1010) (= 1,8 - naphthalenedicarboxylic anhydride), which is known as safener for maize in seed dressing to prevent thiocarbamate herbicide damage.

n) active compounds of the chromaneacetic acid derivatives type, such as, for example,"ACL 304415" (CAS Reg. No. 31541-57-8) (=2-84-carboxychroman-4-yl)acetic acid by American Cyanamid).

o) active compounds which, in addition to a herbicidal action against harmful plants, also have a safener action on crop plants, such as, for example,"dimepiperate" or "AMY-93" (PM, pp. 302-303) (= S-1-methyl-1-phenylethyl piperidine-1-carbothioate),"daimuron" or "ASK 23" (PM, p. 247)(=1-(1-methyl-1-phenylethyl)-3-p-tolylurea),"cumyluron"="AJC-940"(=3-(2-chlorophenyl methyl) -1-(1 -methyl- 1 -phenyl- ethyl)urea, see JP-A- 60087254),"methoxyphenon" or "ANK 049" (=3,3'-dimethyl-4-methoxy-benzophenone), "CSB"(=1-bromo-4- (chloromethylsulfonyl) benzene) (CAS Reg. No. 54091-06-4 by Kumiai).

In a preferred embodiment, the safener is one or more compounds selected from, for example, isoxadifen-ethyl (CAS NO.: 163520-33-0), cyprosulfamide (CAS NO.: 221667-31-8), mefenpyr-diethyl (CAS NO.: 135590-91-9), cloquintocet-mexyl (CAS NO.: 99607-70-2), gibberellic acid (CAS NO.: 77-06-5), furilazole (CAS NO.: 121776-33-8), metcamifen (CAS NO.: 129531-12-0).

The composition of the present invention may be diluted prior to use or used directly by users. The compositon can be prepared through a conventional processing method, that is, the active ingredient(s) is mixed with a liquid solvent or a solid carrier, and then one or more of the surfactants such as a dispersant, a stabilizer, a wetting agent, an adhesive, or a defoaming agent, etc. are added.

The herbicidal composition may be in a form of a formulation which is selected from: a dispersible oil suspension, a water suspension, a suspoemulsion, a wettable powder, an emulsifiable concentrate, a water-dispersible granule (a dry suspension), an aqueous emulsion and a microemulsion.

In short, the composition of the present invention can be mixed with solid and liquid additives conventionally used in formulations of the prior art.

The present invention also provides use of the ternary herbicidal composition for controlling a harmful weed in a crop; and provides a method for controlling unwanted plant growth, which comprises applying the ternary herbicidal composition to plants, plant parts, plants seed or plant growing area; preferably, the herbicidal composition being used to selectively control a harmful plant in a crop.

In addition, the composition according to the invention can be sprayed to a leaf of a plant to be treated, i.e., the composition of the invention can be applied to a weed, especially to the weed which is harmful to the growth of crops, and particularly to a surface of the weed from where the weed invades or is likely to invade crops.

When the herbicidal composition of the present invention is applied, an unexpected synergistic effect is achieved, and the herbicidal activity is greater than a single or a combination of any two herbicides or the sum of the predicted activity of each herbicide. The synergistic effect is manifested by a reduced application rate, a broader weed control spectrum, and faster and more durable weeding action, all of which are required for weed control practives. In regarding to the described characteristics, the composition is significantly superior to the existing herbicides in the art. It is more environmentally friendly since the composition is used in less amount than that of the existing herbicides in the art.

The herbicidal composition of the present invention also has following advantages:

(1) The composition of the present invention is environmentally friendly, which is easily degraded in the environment, and is suitable for a plurality of crop fields.

(2) The herbicidal composition of the invention is of low cost and convenient in usage, and has great economic and social benefit for popularization and application thereof.

**Specific mode for carrying out the invention**

The following examples provided are not intend to limit the invention, but merely to illustrate how the invention is carried out. These examples show particularly significant effectiveness to certain weeds. Examples are as follows.

A) Examples

1. Water suspension of huanbifucaotong+diflufenican+flufenacet (8+8+12)

8% huanbifucaotong+8% diflufenican+12% flufenacet +5% polycarboxylate +3% rosin modified block polyether +2% phenylethyl phenol polyoxyethylene ether phosphate triethanolamine salt +0.15% xanthan gum +1.2% magnesium aluminum silicate +0.1% a defoaming agent +3% ethylene glycol + water

2. Water suspension of huanbifucaotong+diflufenican+flufenacet (8+2+3)

8% huanbifucaotong+2% diflufenican+3% flufenacet +5% polycarboxylate +3% rosin modified block polyether +2% phenylethyl phenol polyoxyethylene ether phosphate triethanolamine salt +0.15% xanthan gum +1.2% magnesium aluminum silicate +0.1% a defoaming agent +3% ethylene glycol + water

3. Water suspension of huanbifucaotong+diflufenican+flufenacet (4+16+6)

4% huanbifucaotong+16% diflufenican+6% flufenacet +5% polycarboxylate +3% rosin modified block polyether +2% phenylethyl phenol polyoxyethylene ether phosphate triethanolamine salt +0.15% xanthan gum +1.2% magnesium aluminum silicate +0.1% a defoaming agent +3% ethylene glycol + water

4. Water suspension of huanbifucaotong+diflufenican+flufenacet (2+2+12)

2% huanbifucaotong+2% diflufenican+12% flufenacet +5% polycarboxylate +3% rosin modified block polyether +2% phenylethyl phenol polyoxyethylene ether phosphate triethanolamine salt +0.15% xanthan gum +1.2% magnesium aluminum silicate +0.1% a defoaming agent +3% ethylene glycol + water

5. Dispersible oil suspension of huanbifucaotong+diflufenican+flufenacet (6+6+9)

6% huanbifucaotong+6% diflufenican+9% flufenacet +5% calcium dodecylbenzen sulfonate + 4% fatty alcohol polyoxyethylene ether +5% castor oil polyoxyethylene ether +1% organobentonite +1% fumed silica +10%100# solvent oil + methyl oleate as balance

6. Wettable powder of huanbifucaotong+diflufenican+flufenacet (16+16+24)

16% huanbifucaotong+16% diflufenican+24% flufenacet +8% naphthalene sulfonate as a dispersant +3% sodium dodecyl sulfate +10% precipitated silica + kaolin as balance

7. Wettable powder of huanbifucaotong+diflufenican+flufenacet (12+12+18)

12% huanbifucaotong+12% diflufenican+18% flufenacet +10% naphthalene sulfonate as a dispersant +2% polycarboxylate as a dispersant +4% sodium dodecyl sulfate +10% precipitated silica +1% polyvinyl alcohol + kaolin as balance

The equipments for processing the above water suspensions: a mixing tank, a colloid mill, a sand mill, and a shearer etc.

The process for processing the above water suspensions: all of the materials were fed into the mixing tank and mixed under stirring, introduced into the colloid mill, then subjected to 3-grade grinding in the sand mill, and finally sheared uniformly in the shearer, and transferred to the storage tank after passing the inspection.

The equipments for processing the above dispersible oil suspension: a mixing tank, a colloid mill, a sand mill, and a shearer etc.

The process for processing the above dispersible oil suspension: all of the materials were fed into the mixing tank and mixed under stirring, introduced into the colloid mill, then subjected to 3-grade grinding in the sand mill, and finally sheared uniformly in the shearer, and transferred to the storage tank after passing the inspection.

The equipments for processing the above water-dispersible granule: a jet mill, a coulter type mixer, a basket granulator, a drying oven, and a screening device etc.

The process for processing the above water-dispersible granule: the above materials were mixed uniformly, passed through the jet mill, kneaded by adding water and granulized, dried, and screened to obtain the product.

The equipments for processing the above wettable powders: a mechanical mill, and a jet mill.

The process for processing the above wettable powders: the technical material, auxiliaries, silica, kaolin, etc. were fed into the mechanical mill, then introduced into the jet mill, sampled, and detected, and qualified product was for future use.

B) Efficacy assays (Post-emergence treatment by performing foliage spray)

1) Experimental conditions

1.1) Tested targets

*Malachium aquaticum, Matricaria recutita,* and *Veronica didyma Tenore* were collected in Xinghua of Jiangsu Province.

The above weeds were cultivated by a pot culture method. A 180 × 140 mm plastic nutritional bowl contained 4/5 topsoil from the field was placed in an enamel pan, wherein the soil had been air-dried and screened and had an initial moisture content of 20%. Full and uniform weed seeds were selected, soaked in warm water at 25°C for 6 hours, and germinated in a 28°C biochemical incubator (darkness). The weed seeds that had just germinated were evenly placed on the surface of the soil and then covered with 0.5-1 cm soil according to the sizes of seeds.

1.2) Culture conditions

The culture was carried out in a controllable sunlight greenhouse at 20 to 30°C, in natural light, and relative humidity of 57% to 72%. The soil was loam with an organic matter content of 1.63%, a pH value of 7.1, an alkali-hydrolyzable nitrogen of 84.3 mg/kg, a rapidly available phosphorus of 38.5 mg/kg, and a rapidly available potassium 82.1 mg/kg.

1.3) Equipments and apparatuses

3WP-2000-type Walking Spray Tower (Nanjing Institute of Agricultural Machinery, the Ministry of Agriculture); GA10-type ten thousandth Electronic Balance (Germany); ZDR2000-type Intelligent Data Recorder (Hangzhou Zeda Instrument Co., Ltd.); and SPX-type Intelligent Biochemical Incubator (Ningbo Jiangnan Instrument Factory).

2) Designs of experiments

2.1) Reagents

The active ingredient huanbifucaotong was produced by our company, and the others were purchased from reagent companies. The technical materials were all dissolved in acetone, and diluted with an aqueous solution containing 0.1% emulsifier Tween-80. The dilution is performed as required.

2.2) Experimental treatments

2.2.1) Determination of dosage

A ratio of the active ingredients or amounts thereof in each group depends on the characteristics and toxicity of the agents, as well as the main application purpose of a corresponding formulation. Based on the pre-tests in this study, the dosage of the active ingredients applied alone and in combination were shown in the tables. Water containing the solvent and emulsifier same with the above groups but free of the agents was used as a blank control.

2.2.2) Repetition of experiments

3 pots with 20 weed seeds per pot were treated in one treatment with 4 replications per treatment, that is, a total of 60 weeds were treated in one treatment.

2.3) Treatment method

2.3.1) The timing and frequency of the treatment

The agents were used for only once in the experiment. In the stage of weeds with 1 leaf, the weeds were thinned out to maintain 15 weeds per pot and 45 weeds for each treatment, then continued to be cultured to 2~3 leaves stage, and treated by sprayed on stems and leaves.

2.3.2) Equipments and methods for applying agents

The well-cultured weeds were evenly placed on a platform with an area of 0.5m², and a solution of agents was sprayed on the stems and leaves thereof by the 3WP-2000-type walking spray tower at a dosage of 30kg/ha and at a spray pressure of 0.3MPa. After all the solution was sprayed, the valve was closed. After 30 seconds, the door of the spray tower was opened, and the nutritional bowl was taken out. Then the valve was opened, and the spray tube was cleaned by spraying 50 ml of water.

3) Experimental methods

A pot-culture method was employed. For the cultivation of weeds, please refer to the Section 1.1, and "Pesticide guidelines for laboratory bioactivity tests - herbicides". As to a method for applying agents, please refer to the section 2.3.2, that is, a foliage treatment was employed. After the treatment, the weeds were routinely cultured in a greenhouse, and a water layer of 1-2 cm was always maintained during the test.

4) Data investigation and statistical analysis

4.1) Investigation methods

A method for investigating absolute number was employed, wherein whole seedlings of survival weeds were cut off with a blade along the soil surface, and the fresh weight of the weeds was weighed with an analytical balance. For dead weeds, the fresh weight thereof was zero.

4.2) Investigation timing and frequency

The investigation was performed after 15 days of the treatment for only once.

4.3) Statistical analysis of the data

Combined effect of a combination of any two or three active ingrdients on weeds was evaluated by the Colby method.

After 15 days, the green tissues from each treated area were cut and weighed with electronic balance, the actual survival rate was calculated: E(%)=(fresh weight of weeds in the treated area/fresh weight of weeds in the control area)* 100

The calculating formula of theoretical weed survival rate: $E0(\%)=X\times Y/100$ (a combination of two active ingredients)

Wherein, in the formula, X represented the weed survival rate of A in a dosage of P, Y represented the weed survival rate of B in a dosage of Q, E0 represented the theoretical weed survival rate of A+B in a dosage of P+Q, and E represented the actual weed survival rate in each treatment.

$$E0 = X\times Y\times Z\times\ldots\times N/100^{(n-1)} \text{( a combination of three or more active ingredients)}$$

Wherein, in the formula, X, Y, Z, and N each represented the actual survival rate of n single formulations, and n represented the number of compounded herbicides.

When E0-E>10%, it corresponded to an synergistic effect; when E0-E<-10%, it corresponded to an antagonistic effect; when E0-E ranged between -10% and 10%, it corresponded to an additional effect.

The statistical results were shown in the tables 1-3 below.

Table 1 A is huanbifucaotong, B is diflufenican, C is flufenacet, the tested target is *Malachium aquaticum*

| A:B:C | E (A) (%) | E (B) (%) | E (C) (%) | E (A+B) (%) | E (A+C) (% ) | E (B+C) (%) | E (A+B+ C) (%) | $E_0$ (A+B+) C) (%) | $E_0$ ((A+ B) +C) (%) | $E_0$ ( (A+ C) B+) (%) | $E_0$ (A+ (B+C ) (%) | $E_0$ (A+B+ C) -E (A+B+ C) (%) | $E_0$ ( (A+ B) +C) -E ( A+B+C) (%) | $E_0$ ((A+ C) +B) -E (A+B+ C) (%) | $E_0$ (A+ (B+C )) -E (A+B+ C) (%) |
|---|---|---|---|---|---|---|---|---|---|---|---|---|---|---|---|
| 40+40+60 | 53.2 | 58.2 | 61.6 | 26.7 | 31.6 | 27.4 | 4.4 | 19.1 | 16.4 | 18.4 | 14.6 | 14.7 | 12.1 | 14.0 | 10.2 |
| 40+20+60 | 53.2 | 73.7 | 61.6 | 32.5 | 31.6 | 33.1 | 7.4 | 24.2 | 20.0 | 23.3 | 17.6 | 16.8 | 12.7 | 15.9 | 10.3 |
| 40+10+60 | 53.2 | 82.3 | 61.6 | 43.8 | 31.6 | 38.4 | 9.8 | 27.0 | 27.0 | 26.0 | 20.4 | 17.2 | 17.2 | 16.2 | 10.7 |
| 20+40+60 | 74.5 | 58.2 | 61.6 | 35.3 | 36.2 | 27.4 | 8.0 | 26.7 | 21.7 | 21.1 | 20.4 | 18.7 | 13.7 | 13.1 | 12.4 |
| 10+40+60 | 85.2 | 58.2 | 61.6 | 43.7 | 47.3 | 27.4 | 10.1 | 30.5 | 26.9 | 27.5 | 23.3 | 20.4 | 16.8 | 17.4 | 13.2 |
| 40+40+30 | 53.2 | 58.2 | 74.5 | 26.7 | 50.5 | 39.2 | 6.9 | 23.1 | 19.9 | 29.4 | 20.9 | 16.2 | 13.0 | 22.5 | 14.0 |
| 40+40+15 | 53.2 | 58.2 | 88.2 | 26.7 | 56.3 | 54.3 | 9.7 | 27.3 | 23.5 | 32.8 | 28.9 | 17.6 | 13.8 | 23.1 | 19.2 |
| 10+10+15 | 85.2 | 82.3 | 88.2 | 70.4 | 76.4 | 71.9 | 47.0 | 61.8 | 62.1 | 62.9 | 61.3 | 14.8 | 15.0 | 15.8 | 14.2 |

EP 3 818 830 A1

Table 2 A is huanbifucaotong, B is diflufenican, C is flufenacet, the tested target is *Matricaria recutita*

| A:B:C | E (A) (%) | E (B) (%) | E (C) (%) | E (A+B) (%) | E (A+C) (%) | E (B+C) (%) | E (A+B+C) (%) | $E_0$ (A+B+C) (%) | $E_0$ (( A+B) +C ) (%) | $E_0$ ( (A+ C) B+ ) (%) | $E_0$ (A+ (B+C ) ) (%) | $E_0$ (A+B+ C) -E (A+B+ C) (%) | $E_0$ ( (A+ B) +C) -E (A+B+ C) (%) | $E_0$ ( (A+ C) +B) -E (A+B+ C) (%) | $E_0$ (A+ (B+C ) ) -E (A+B+ C) (%) |
|---|---|---|---|---|---|---|---|---|---|---|---|---|---|---|---|
| 40+40+60 | 43.3 | 55.6 | 57.2 | 28.7 | 30.5 | 35.6 | 3.271 | 13.771 | 16.416 | 16.958 | 15.415 | 10.5 | 13.146 | 13.687 | 12.144 |
| 40+20+60 | 43.3 | 69.8 | 57.2 | 33.4 | 30.5 | 41.8 | 6.088 | 17.288 | 19.105 | 21.289 | 18.099 | 11.2 | 13.017 | 15.201 | 12.012 |
| 40+10+60 | 43.3 | 81.5 | 57.2 | 45.5 | 30.5 | 46.9 | 7.886 | 20.186 | 26.026 | 24.858 | 20.308 | 12.3 | 18.140 | 16.972 | 12.422 |
| 20+40+60 | 56.4 | 55.6 | 57.2 | 37.1 | 36.4 | 35.6 | 6.337 | 17.937 | 21.221 | 20.238 | 20.078 | 11.6 | 14.884 | 13.901 | 13.741 |
| 10+40+60 | 72.4 | 55.6 | 57.2 | 44.0 | 45.2 | 35.6 | 10.326 | 23.026 | 25.168 | 25.131 | 25.774 | 12.7 | 14.842 | 14.806 | 15.449 |
| 40+40+30 | 43.3 | 55.6 | 74.9 | 28.7 | 51.3 | 43.6 | 7.132 | 18.032 | 21.496 | 28.523 | 18.879 | 10.9 | 14.364 | 21.391 | 11.747 |
| 40+40+15 | 43.3 | 55.6 | 89.3 | 28.7 | 55.8 | 55.3 | 9.399 | 21.499 | 25.629 | 31.025 | 23.945 | 12.1 | 16.230 | 21.626 | 14.546 |
| 10+10+15 | 72.4 | 81.5 | 89.3 | 68.4 | 77.6 | 71.5 | 39.492 | 52.692 | 61.081 | 63.244 | 51.766 | 13.2 | 21.589 | 23.752 | 12.274 |

Table 3 A is huanbifucaotong, B is diflufenican, C is flufenacet, the tested target is *Veronica didyma Tenore*

| A:B:C | E (A) (%) | E (B) (%) | E (C) (%) | E (A+B) (%) | E (A+C) (%) | E (B+C) (%) | E (A+B+C) (%) | E₀ (A+B+C) (%) | E₀ (A+B) +C) (%) | E₀ ((A+C) B+) (%) | E₀ (A+ (B+C )) (%) | E₀ (A+B+C) -E (A+B+C) (%) | E₀ ((A+B) +C) -E (A+B+C) (%) | E₀ ((A+C) +B) -E (A+B+C) (%) | E₀ (A+ (B+C ) ) -E (A+B+C) (%) |
|---|---|---|---|---|---|---|---|---|---|---|---|---|---|---|---|
| 40+40+60 | 43.2 | 59.3 | 64.1 | 28.7 | 30.1 | 36.2 | 5.221 | 16.421 | 18.397 | 17.849 | 15.638 | 11.2 | 13.176 | 12.628 | 10.418 |
| 40+20+60 | 43.2 | 67.9 | 64.1 | 33.4 | 30.1 | 43.3 | 7.002 | 18.802 | 21.409 | 20.438 | 18.706 | 11.8 | 14.407 | 13.436 | 11.703 |
| 40+10+60 | 43.2 | 80.5 | 64.1 | 45.5 | 30.1 | 56.4 | 9.991 | 22.291 | 29.166 | 24.231 | 24.365 | 12.3 | 19.174 | 14.239 | 14.373 |
| 20+40+60 | 56.6 | 59.3 | 64.1 | 37.1 | 37.9 | 36.2 | 8.414 | 21.514 | 23.781 | 22.475 | 20.489 | 13.1 | 15.367 | 14.060 | 12.075 |
| 10+40+60 | 78.9 | 59.3 | 64.1 | 44.0 | 42.8 | 36.2 | 15.091 | 29.991. | 28.204 | 25.380 | 28.562 | 14.9 | 13.113 | 10.289 | 13.471 |
| 40+40+30 | 43.2 | 59.3 | 71.9 | 28.7 | 35.2 | 41.8 | 6.819 | 18.419 | 20.635 | 20.874 | 18.058 | 11.6 | 13.816 | 14.055 | 11.239 |
| 40+40+15 | 43.2 | 59.3 | 85.6 | 28.7 | 39.4 | 57.2 | 9.229 | 21.929 | 24.567 | 23.364 | 24.710 | 12.7 | 15.339 | 14.136 | 15.482 |
| 10+10+15 | 78.9 | 80.5 | 85.6 | 68.4 | 65.3 | 69.3 | 41.768 | 54.368 | 58.550 | 52.567 | 54.678 | 12.6 | 16.782 | 10.798 | 12.909 |

Note: E(A): The actual measured fresh weight survival rate after treated by component A at a given dosage.

E(B): The actual measured fresh weight survival rate after treated by component B at a given dosage.

E(C): The actual measured fresh weight survival rate after treated by component C at a given dosage.

E(A+B): The actual measured fresh weight survival rate after treated by the combination of component A and component B at a given dosage.

E(A+C): The actual measured fresh weight survival rate after treated by the combination of component A and component C at a given dosage.

E(B+C): The actual measured fresh weight survival rate after treated by the combination of component B and component C at a given dosage.

E(A+B+C): The actual measured fresh weight survival rate after treated by the combination of component A, B and C at a given dosage.

$E_0$(A+B+C): The theoretical fresh weight survival rate after treated by the combination of component A, B and C at a given dosage.

$E_0$((A+B)+C): the theoretical fresh weight survival rate of the two-active-ingredient combination of component A + B as a whole and component C at a given dosage.

$E_0$((A+C)+B): the theoretical fresh weight survival rate of the two-active-ingredient combination of component A + C as a whole and component B at a given dosage.

$E_0$(A+(B+C)): the theoretical fresh weight survival rate of the two-active-ingredient combination of component B + C as a whole and component A at a given dosage.

**C) Pilot** sites

Tests wherein the herbicidal compositions prepared in Examples 1 to 7 were used to control weeds in the fields.
In 2016, tests were conducted at 4 test sites in Zhumadian of Henan province. The weeds in the fields mainly included: *Descurainia sophia, Capsella bursa-pastoris, Malachium aquaticum, Stellaria media, Galium aparine, Veronica didyma Tenore,* etc..
Experimental methods: In the stage of 1 leaf of the weeds, the agent was evenly sprayed on stems and leaves through a manual sprayer, wherein the amount of added water was 30 kg/667m² The specific tested agents and dosage thereof were shown in Table 4. The area of the pilot site was 50 square meters, and each treatment was repeated for 4 times. The weed control efficiency after 45 days of application was shown in Table 4.

$$\text{Weed control efficiency (\%)} = \frac{\text{number of weed strains in the water control area} - \text{number of weed strains in the area treated with agents}}{\text{number of weed strains in the water control area}}$$

Table 4 The control effects in pilot sites

| Example | Dosage form | Dosage (g a.i./ha) | Control effect expressed by fresh weight (%) |
|---|---|---|---|
| Example 1 | SC | 210 | 98.2 |
| Example 2 | SC | 195 | 97.5 |
| Example 3 | SC | 390 | 96.1 |
| Example 4 | SC | 480 | 97.4 |
| Example 5 | OD | 210 | 98.2 |

(continued)

| Example | Dosage form | Dosage (g a.i./ha) | Control effect expressed by fresh weight (%) |
|---|---|---|---|
| Example 6 | WP | 210 | 95.4 |
| Example 7 | WDG | 210 | 96.3 |
| 6%huanbifucaotong OD | | 60 | 39.7 |
| 500 g/L diflufenican SC | | 60 | 27.2 |
| 42.4%flufenacet SC | | 90 | 21.5 |
| 6%huanbifucaotong OD+500 g/L diflufenican SC | | 60+60 | 75.4 |
| 6%huanbifucaotong OD+42.4%flufenacet SC | | 60+90 | 71.6 |
| 500 g/L diflufenican SC+42.4%flufenacet SC | | 60+90 | 63.2 |

In 2017, tests were conducted at 4 test sites in Xinghua of Jiangsu province. The weeds in the fields mainly included: *Capsella bursa-pastoris, Sinapis arvensis, Malachium aquaticum, Galium aparine, Veronica didyma Tenore,* etc..

Experimental methods: Before the emergence of weeds, the agent was evenly sprayed on stems and leaves through a electric sprayer, wherein the amount of added water was 30 kg/667m$^2$. The specific tested agents and dosage thereof were shown in Table 5. The area of the pilot site was 50 square meters, and each treatment was repeated for 4 times. The weed control efficiency after 45 days of application was shown in Table 5.

$$\text{Weed control efficiency (\%)} = \frac{\text{number of weed strains in the water control area} - \text{number of weed strains in the area treated with agents}}{\text{number of weed strains in the water control area}}$$

Table 5 The control effects in pilot sites

| Example | Dosage form | Dosage (g a.i./ha) | Control effect expressed by fresh weight (%) |
|---|---|---|---|
| Example 1 | SC | 210 | 98.4 |
| Example 2 | SC | 195 | 96.9 |
| Example 3 | SC | 390 | 95.4 |
| Example 4 | SC | 480 | 98.1 |
| Example 5 | OD | 210 | 98.9 |
| Example 6 | WP | 210 | 94.7 |
| Example 7 | WDG | 210 | 95.2 |
| 6%huanbifucaotong OD | | 60 | 43.2 |
| 500 g/Ldiflufenican SC | | 60 | 36.7 |
| 42.4%flufenacet SC | | 90 | 34.2 |
| 6%huanbifucaotong OD+500 g/L diflufenican SC | | 60+60 | 80.6 |
| 6%huanbifucaotong OD+42.4%flufenacet SC | | 60+90 | 73.1 |
| 500 g/L diflufenican SC+42.4%flufenacet SC | | 60+90 | 68.2 |

In the fall of 2017, tests were conducted in Europe. The weeds in the fields mainly included: *Capsella bursa-pastoris, Galium aparine, Lamium barbatum Sieb. et Zucc., Matricaria recutita, Stellaria media, Alopecurus myosuroides.*

Experimental methods: In the stage of 1 leaf of the weeds, the agent was evenly sprayed on stems and leaves through a electric sprayer, wherein the amount of added water was 30 kg/667m$^2$ The specific tested agents and dosage thereof were shown in Table 6. The area of the pilot site was 50 square meters, and each treatment was repeated for 4 times. The weed control efficiency after 160 days of application was shown in Table 6.

Table 6 The control effects in pilot sites

| Example | Dosage form | Dosage (g a.i./ha) | Visual control effect (%) |
|---|---|---|---|
| Example 1 | SC | 210 | 97 |
| Example 2 | SC | 195 | 97 |
| Example 3 | SC | 390 | 98 |
| Example 4 | SC | 480 | 96 |
| Example 5 | OD | 210 | 98 |
| Example 6 | WP | 210 | 95 |
| Example 7 | WDG | 210 | 96 |
| 6%huanbifucaotong OD+500 g/L diflufenican SC+42.4%flufenacet SC | | 60+60+90 | 97 |
| 6%huanbifucaotong OD | | 60 | 63 |
| 500 g/L diflufenican SC | | 60 | 45 |
| 42.4%flufenacet SC | | 90 | 32 |
| 6%huanbifucaotong OD+500 g/L diflufenican SC | | 60+60 | 80 |
| 6%huanbifucaotong OD+42.4%flufenacet SC | | 60+90 | 77 |
| 500 g/L diflufenican SC+42.4%flufenacet SC | | 60+90 | 75 |

After making extensive experimentations and explorations, the present inventors have unexpectedly discovered that after the claimed compsositions are used to control weeds such as *Malachium aquaticum, Stellaria media, Arenaria serpyllifolia, Cardamine hirsute, Capsella bursa-pastoris, Descurainia sophia, Galium aparine, Veronica didyma Tenore, Sonchus arvensis, Senecio scandens, Matricaria recutita,* etc.; and, surprising and unexpected synergistic effects are achieved, and the herbicidal activity is greater than a single or a combination of any two herbicides or the sum of the predicted activity of each herbicide, and the synergistic effects are particularly significant at low doses, thereby reducing application dose and reducing environmental pollution, and the rational compounding leads to reduced agricultural costs and highly effective control of weeds resistant to ALS inhibitors, PPO inhibitors and hormone herbicides. The claimed compositions have a good application prospect. At the same time, it was shown by experimentations that the claimed compositions exhibit good selectivity and excellent synergistic effects in fields such as wheat fields, maize fields and rice fields, as well as for crops such as peanuts, sugar cane, sorghum, millet, potato, rape, soybean, cotton, vegetables, annual bluegrass, Tall fescue, and *Zoysia japonica,* and can be developed into herbicidical blends having broad market values.

**Claims**

1. A ternary herbicidal composition, wherein comprises an active ingredient A, an active ingredient B and an active ingredient C in an herbicidally effective amount, wherein the active ingredient A is huanbifucaotong and/or salt thereof; the active ingredient B is diflufenican and/or salt thereof; the active ingredient C is flufenacet and/or salt thereof.

2. The ternary herbicidal composition according to claims 1, wherein the ingredient A to the ingredient B to the ingredient C is in a weight ratio of 1~100:1~100:1~100, preferably 5~80:5~80:5~80, more preferably 8~60:8~60:10~70, further preferably 10~40:10~40:15~60.

3. The ternary herbicidal composition according to claims 1 or 2, wherein the ingredients A, B and C together account for 1-95% of the total weight of the herbicidal composition, preferably 10-80%.

4. The ternary herbicidal composition according to any one of claims 1 to 3, wherein the herbicidal composition further comprises a conventional auxiliary.

5. The ternary herbicidal composition according to claims 4, wherein the conventional auxiliary comprises a carrier, and/or a surfactant.

6. The ternary herbicidal composition according to any one of claims 1 to 5, wherein the herbicidal composition further comprises one or more safeners.

7. The ternary herbicidal composition according to any one of claims 1 to 6, wherein the herbicidal composition is in a form of a formulation which is selected from: a dispersible oil suspension, a water suspension, a suspoemulsion, a wettable powder, an emulsifiable concentrate, a water-dispersible granule, an aqueous emulsion and a microemulsion.

8. Use of the ternary herbicidal composition according to any one of claims 1 to 7 for controlling a harmful weed in a crop.

9. A method for controlling unwanted plant growth, comprising applying a the ternary herbicidal composition according to any one of claims 1 to 7 to plants, plant parts, plant seeds or plant growing area.

10. The method according to claims 9, wherein the herbicidal composition being used to selectively control a harmful weed in a crop.

## INTERNATIONAL SEARCH REPORT

| International application No. |
|---|
| **PCT/CN2019/087686** |

**A.    CLASSIFICATION OF SUBJECT MATTER**

A01N 47/30(2006.01)i;  A01N 43/40(2006.01)i;  A01N 43/707(2006.01)i;  A01N 43/56(2006.01)i

According to International Patent Classification (IPC) or to both national classification and IPC

**B.    FIELDS SEARCHED**

Minimum documentation searched (classification system followed by classification symbols)

A01N

Documentation searched other than minimum documentation to the extent that such documents are included in the fields searched

Electronic data base consulted during the international search (name of data base and, where practicable, search terms used)

CNABS, CNKI, VEN, STN, 环吡氟草酮, 吡氟酰草胺, 氟噻草胺, ciclopirox, fluridone, bicyclopyrone, diflufenican, couger, flufenacet

**C.    DOCUMENTS CONSIDERED TO BE RELEVANT**

| Category* | Citation of document, with indication, where appropriate, of the relevant passages | Relevant to claim No. |
|---|---|---|
| PX | CN 109418274 A (QINGDAO QINGYUAN COMPOUND CO., LTD.) 05 March 2019 (2019-03-05)<br>    claims 1-10 | 1-10 |
| PX | CN 108703144 A (QINGDAO QINGYUAN COMPOUND CO., LTD.) 26 October 2018 (2018-10-26)<br>    description, page 93 | 1-10 |
| Y | CN 105638703 A (QINGDAO QINGYUAN COMPOUND CO., LTD.) 08 June 2016 (2016-06-08)<br>    claims 1-10 | 1-10 |
| Y | CN 107743966 A (NANJING AGRICULTURAL UNIVERSITY) 02 March 2018 (2018-03-02)<br>    claims 1-9, and description, page 2 | 1-10 |
| Y | CN 108013052 A (JINAN KESAI AGROCHEM CO., LTD.) 11 May 2018 (2018-05-11)<br>    claims 1-6, and description, page 2 | 1-10 |
| Y | WO 2014138547 A1 (DOW AGROSCIENCES LLC) 12 September 2014 (2014-09-12)<br>    claims 1-15 | 1-10 |

☑ Further documents are listed in the continuation of Box C.          ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **06 August 2019** | **19 August 2019** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

# EP 3 818 830 A1

## INTERNATIONAL SEARCH REPORT

International application No.

**PCT/CN2019/087686**

### C. DOCUMENTS CONSIDERED TO BE RELEVANT

| Category* | Citation of document, with indication, where appropriate, of the relevant passages | Relevant to claim No. |
|---|---|---|
| Y | WO 2014001359 A1 (BAYER CROPSCIENCE AG) 03 January 2014 (2014-01-03) claims 1-10 | 1-10 |
| Y | CN 107156164 A (BEIJING KEFAWEIYE PESTICIDE RESEARCH CENTER) 15 September 2017 (2017-09-15) claims 2-4 | 1-10 |
| Y | CN 107751216 A (SICHUAN LIER CROP SCIENCE CO., LTD.) 06 March 2018 (2018-03-06) claims 1-6 | 1-10 |
| Y | CN 106818834 A (JIANGSU AGROCHEM LABORATORY CO., LTD.; NANJING GAOHENG BIOTECHNOLOGY CO., LTD.) 13 June 2017 (2017-06-13) claims 1-8, and description, page 2 | 1-10 |
| A | CN 107810963 A (QINGDAO QINGYUAN COMPOUND CO., LTD.) 20 March 2018 (2018-03-20) entire document | 1-10 |

Form PCT/ISA/210 (second sheet) (January 2015)

17

INTERNATIONAL SEARCH REPORT
Information on patent family members

International application No.

**PCT/CN2019/087686**

| Patent document cited in search report | | | Publication date (day/month/year) | Patent family member(s) | | | Publication date (day/month/year) |
|---|---|---|---|---|---|---|---|
| CN | 109418274 | A | 26 October 2018 | None | | | |
| CN | 108703144 | A | 26 October 2018 | None | | | |
| CN | 105638703 | A | 08 June 2016 | CN | 105638703 | B | 14 November 2017 |
| CN | 107743966 | A | 02 March 2018 | None | | | |
| CN | 108013052 | A | 11 May 2018 | None | | | |
| WO | 2014138547 | A1 | 12 September 2014 | RU | 2654784 | C2 | 22 May 2018 |
| | | | | ZA | 201506830 | B | 26 July 2017 |
| | | | | BR | 112015019700 | A2 | 18 July 2017 |
| | | | | RU | 2015142669 | A | 13 April 2017 |
| | | | | AU | 2014225487 | A1 | 24 September 2015 |
| | | | | EP | 2964021 | A1 | 13 January 2016 |
| | | | | UA | 115171 | C2 | 25 September 2017 |
| | | | | AU | 2014225487 | B2 | 14 September 2017 |
| | | | | US | 2014256551 | A1 | 11 September 2014 |
| | | | | IL | 240772 | A | 30 May 2019 |
| | | | | EP | 2964021 | A4 | 20 July 2016 |
| | | | | CA | 2901019 | A1 | 12 September 2014 |
| | | | | CN | 105007727 | A | 28 October 2015 |
| | | | | IL | 240772 | D0 | 29 October 2015 |
| | | | | CL | 2015002389 | A1 | 26 August 2016 |
| WO | 2014001359 | A1 | 03 January 2014 | PL | 2866560 | T3 | 31 May 2019 |
| | | | | ES | 2714929 | T3 | 30 May 2019 |
| | | | | US | 2015148233 | A1 | 28 May 2015 |
| | | | | CA | 2877797 | A1 | 03 January 2014 |
| | | | | EP | 2866560 | A1 | 06 May 2015 |
| | | | | RU | 2015102199 | A | 20 August 2016 |
| | | | | AU | 2013283381 | A1 | 22 January 2015 |
| | | | | HR | P20190490 | T1 | 03 May 2019 |
| | | | | EP | 2866560 | B1 | 12 December 2018 |
| | | | | SI | 2866560 | T1 | 30 April 2019 |
| | | | | RU | 2629663 | C2 | 31 August 2017 |
| | | | | CN | 104519737 | A | 15 April 2015 |
| | | | | DK | 2866560 | T3 | 01 April 2019 |
| | | | | AR | 091576 | A1 | 11 February 2015 |
| | | | | CL | 2014003495 | A1 | 10 April 2015 |
| | | | | US | 9648878 | B2 | 16 May 2017 |
| | | | | CN | 104519737 | B | 09 November 2016 |
| | | | | RS | 58464 | B1 | 30 April 2019 |
| | | | | LT | 2866560 | T | 25 March 2019 |
| | | | | AU | 2013283381 | B2 | 02 February 2017 |
| CN | 107156164 | A | 15 September 2017 | None | | | |
| CN | 107751216 | A | 06 March 2018 | None | | | |
| CN | 106818834 | A | 13 June 2017 | None | | | |
| CN | 107810963 | A | 20 March 2018 | WO | 2019090815 | A1 | 16 May 2019 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9107874 A
- EP 333131 A
- EP 269806 A
- EP 174562 A
- EP 346620 A
- WO 9108202 A
- WO 9507897 A

- EP 86750 A
- EP 94349 A
- EP 191736 A
- EP 0492366 A
- EP 0582198 A
- JP 60087254 A

**Non-patent literature cited in the description**

- *CHEMICAL ABSTRACTS,* 1855929-45-1
- *CHEMICAL ABSTRACTS,* 83164-33-4
- *CHEMICAL ABSTRACTS,* 142459-58-3
- World Herbicide New Product Technology Handbook. China Agricultural Science and Farming Techniques Press, September 2010
- *CHEMICAL ABSTRACTS,* 96420-72-3
- *CHEMICAL ABSTRACTS,* 31541-57-8

- *CHEMICAL ABSTRACTS,* 54091-06-4
- *CHEMICAL ABSTRACTS,* 163520-33-0
- *CHEMICAL ABSTRACTS,* 221667-31-8
- *CHEMICAL ABSTRACTS,* 135590-91-9
- *CHEMICAL ABSTRACTS,* 99607-70-2
- *CHEMICAL ABSTRACTS,* 77-06-5
- *CHEMICAL ABSTRACTS,* 121776-33-8
- *CHEMICAL ABSTRACTS,* 129531-12-0